Europäisches Patentamt

(19) European Patent Office

Office européen des brevets

(11) Numéro de publication: **0 012 145**
**B1**

(12) **FASCICULE DE BREVET EUROPEEN**

(45) Date de publication du fascicule du brevet: **22.12.82**

(51) Int. Cl.³: **B 60 P 1/48**

(21) Numéro de dépôt: **78400246.1**

(22) Date de dépôt: **18.12.78**

(54) **Dispositif à bras articulés pour la manoeuvre d'une benne de camion.**

(43) Date de publication de la demande:
**25.06.80 Bulletin 80/13**

(45) Mention de la délivrance du brevet:
**22.12.82 Bulletin 82/51**

(84) Etats contractants désignés:
**BE CH DE FR GB IT LU NL SE**

(56) Documents cités:
DE - A - 2 616 813
DE - A - 2 700 188
DE - B - 2 027 259
FR - A - 2 169 810
FR - A - 2 294 064
FR - A - 2 342 183

(73) Titulaire: **Gruelles, Maurice**
**324, avenue de Bir Hakeim**
**F-77350 Le Mee sur Seine (FR)**

(72) Inventeur: **Gruelles, Maurice**
**324, avenue de Bir Hakeim**
**F-77350 Le Mee sur Seine (FR)**

(74) Mandataire: **Barre, Philippe**
**93-95, rue des Amidonniers**
**F-31069 Toulouse Cédex (FR)**

Courier Press, Leamington Spa, England.

### Dispositif à bras articulés pour la manoeuvre d'une benne de camion

L'invention concerne un dispositif de manoeuvre articulé sur un châssis de camion pour permettre de manoeuvrer une benne.

Les dispositifs à bras articulés équipant les camions pour manoeuvrer une benne, visent à mouvoir celle-ci d'une part, pour la mettre en place sur le camion à partir du sol, d'autre part, pour la déposer sur le sol à partir du camion, enfin, lorsque la benne est pleine, pour la soulever et l'incliner fortement afin de décharger son contenu. Cette dernière opération dénommée "bennage" implique une forte inclinaison de la benne pour la vider complètement, tandis que, au contraire, les opérations de mise en place ou de dépose exigent une faible inclinaison pour éviter de déverser une partie du contenu de la benne.

Pour résoudre cette difficulté on a proposé d'utiliser deux bras articulés l'un sur l'autre pour former un profil angulaire d'angle au sommet variable. Une solution consiste à mouvoir un des bras au moyen d'un vérin et à accrocher la benne à l'extrémité de l'autre bras, lequel, à partir d'un certain soulèvement, peut pivoter librement de façon à pendre et à rabaisser le point d'accrochage de la benne; en général un système de butée est prévu pour asservir la position de ce bras lorsque la benne parvient à la fin du mouvement de mise en place sur le camion. Cette solution est par exemple proposée dans le certificat d'addition français n° 75.19135 publié sous le n° 2.294.064. Toutefois cette solution présente un inconvénient grave: le bras où est accrochée la benne étant libre sur un grande partie de sa course, le dispositif manque de stabilité et la benne est soumise durant les manoeuvres, à des mouvements de balancement permanents extrêmements gênants; ces mouvements suscitent des déplacements de la charge à l'intérieur de la benne, qui accentuent encore ce balancement.

Une autre solution proposée dans le brevet français n° 72.43909 publié sous le n° 2.169.810 consiste à asservir le bras où se trouve accrochée la benne, de sorte que celui-ci possède deux mouvements successifs: dans une première phase, ce bras pivote vers l'arrière et fait un angle décroissant avec l'autre bras qui demeure fixe, le point d'accrochage subissant un recul vers l'arrière; dans une seconde phase, le bras se bloque par rapport à l'autre (avec un angle faible par rapport à celui-ci) dans la position atteinte en fin de première phase et l'ensemble ainsi indéformable pivote vers l'arrière jusqu'en fin de mouvement. Le point d'accrochage de la benne décrit donc d'abord un mouvement de recul à peu près horizontal, puis un mouvement circulaire dont le point haut se trouve rabaissé par rapport à ce qu'il serait avec un bras d'accrochage constamment solidaire de l'autre bras. Toutefois cette solution présente des inconvénients. D'une part sa cinématique à deux phases successives conduit à des dispositifs complexes comprenant un grand nombre de pièces parfois compliquées et à des réglages et mises au point délicats. En outre, une telle solution ne peut s'appliquer qu'à des bennes spéciales qui comportent des logements d'accrochage sous leur fond; ce dernier inconvénient est grave en pratique car il existe de nombreuses marques de bennes et l'universalité d'un dispositif de manoeuvre est un avantage très recherché.

Par ailleurs, dans le brevet DE 2.616.813 est décrit un dispositif se composant d'un bras de préhension en forme d'équerre (8), d'un bras intermédiaire (9) permettant le coulissement de ce bras de préhension, d'un bras de levage (12) articulé, d'une part, sur le bras intermédiaire (9) et d'autre part sur une biellette (30) laquelle revient vers l'avant du châssis pour s'articuler sur ce dernier; ce dispositif comporte en outre un bras inférieur (15) articulé à l'arrière du châssis et une bielle (11) articulée sur le bras de préhension (8) et monté, à l'arrière, à coulissement par rapport au bras inférieur (15). Ces membrures (au nombre de 6) forment un système dans lequel le bras de préhension (8) peut être amené à coulisser vers l'arrière au début de la phase de dépose de la benne pour réduire l'inclinaison de celle-ci, tandis que ce bras est conservé en position de fin de coulissement avant pour réaliser le bennage. Toutefois, il s'agit là d'un système complexe, comportant un grand nombre de membrures et d'articulations et dont le fonctionnement correct requiert en pratique des réglages délicats. De plus, pour le bennage il est nécessaire de solidariser la benne sur les bras et cette dernière doit comporter à cet effet des structures appropriées.

La présente invention vise un dispositif de manoeuvre du type comprenant deux bras articulés l'un sur l'autre, dits bras de levage et bras d'accrochage, agencés pour former un profil angulaire d'angle au sommet variable. Elle se propose de fournir une solution nouvelle, éliminant notamment les défauts ci-dessus évoqués des solutions connues.

Un objectif de l'invention est en particulier de fournir un dispositif de manoeuvre, de structure très simplifiée, permettant une inclinaison importante de la benne lors des manoeuvres de bennage, et autorisant la mise en place ou la dépose de celle-ci avec de très faibles inclinaisons.

Un autre objectif est de fournir un dispositif stable non soumis à des mouvements de balancement.

Un autre objectif est de fournir un dispositif universel pouvant être utilisé pour toutes les bennes courantes sans adaptation particulière.

Pour faciliter la compréhension de la description qui suit, les organes du dispositif sont

décrits, sauf indication contaire, en supposant le dispositif à l'état de repos, c'est-à-dire en place sur le camion, la benne étant dans la position de transport; de plus, on désignera par "avant" la portion des organes située vers l'avant du camion (toujours en supposant le dispositif à l'état de repos) et par "arrière" la portion située vers l'arrière.

Le dispositif visé par l'invention comprend: un bras inférieur articulé par son extrémité arrière à l'arrière du camion, un bras de levage articulé par son extrémité arrière vers l'avant du bras inférieur, un bras d'accrochage pourvu à une extrémité libre d'un crochet de préhension articulé en partie basse sur le bras de levage de façon à former avec ce bras de levage un profil angulaire d'angle au sommet variable, des moyens de verrouillage adaptés pour permettre soit de solidariser d'un bloc le bras inférieur et le bras de levage approximativement dans l'alignement l'un de l'autre, soit de libérer ces deux bras pour autoriser un pivotement du bras de levage par rapport au bras inférieur, et au moins un vérin d'entraînement articulé à l'avant du châssis; conformément à la présente invention, le dispositif comprend au moins une bielle articulée, d'une part, par son extrémité avant en partie basse du bras d'accrochage en un point décalé verticalement par rapport à l'articulation du bras de levage sur ledit bras d'accrochage, d'autre part, par son extrémité arrière, sur le bras inférieur en un point décalé verticalement par rapport à l'articulation du bras de levage sur ledit bras inférieur, les articulations des bras de levage et bielle respectivement sur les bras d'accrochage et bras inférieur ayant, pour l'état de repos du dispositif de manoeuvre, des positions inversées l'une par rapport à l'autre de sorte que, dans cet état, les bras de levage et bielle se croisent, le vérin ou les vérins d'entraînement étant agencés pour agir sur une zone intermédiaire du bras de levage de sorte que son ou leur action provoque, lorsque les moyens de verrouillage sont débloqués, un pivotement du bras de levage par rapport au bras inférieur, s'accompagnant, d'abord, d'une décroissance de l'angle entre bras de levage et bras d'accrochage, puis, à partir de la position où le bras de levage et la bielle se décroisent, une croissance dudit angle.

Le ou les vérins peuvent agir directement sur le bras de levage et être attelés en un point intermédiaire de celui-ci; le cas échéant ils peuvent agir indirectement par tout système de transmission approprié, attelé sur ledit bras de levage.

Ainsi, comme on le comprendra mieux plus loin, la cinématique nouvelle du dispositif de l'invention engendre un mouvement continu du crochet de préhension suivant une trajectoire de type elliptique très aplatie, d'abord grâce à une diminution de l'angle entre le bras d'accrochage et le bras de levage, qui permet d'abaisser considérablement le point haut du mouvement, puis grâce à une croissance de cet angle, qui permet au crochet de s'écarter suffisamment au delà de la partie arrière du camion pour saisir une benne sur le sol.

Cette cinématique est obtenue au moyen d'un dispositif très simple puisque, dans sa version la plus simple, il comprend, outre les trois bras usuels, uniquement un vérin de puissance ou un jeu de vérins synchrones parallèles et une bielle ou un jeu de bielles parallèles, dont l'agencement original conditionne les mouvements ci-dessus évoqués; c'est d'ailleurs un des mérites essentiels de l'invention que de pallier les inconvénients des solutions connues tout en parvenant à une simplification structurelle par rapport à celles-ci.

Selon un mode de réalisation préféré, la bielle sus-évoquée est unique et disposée selon l'axe longitudinal du châssis, cependant que le bras de levage est formé par deux membrures situées symétriquement de part et d'autre de ladite bielle, deux vérins d'entraînement synchrones et parallèles étant prévus et attelés chacun à une membrure.

D'autres caractéristiques et avantages de l'invention se dégageront de la description qui suit, en référence aux dessins annexés, lesquels sont donnés à titre d'exemple non limitatif; sur ces dessins qui font partie intégrante de la description:

— la figure 1 est une vue simplifiée en élévation de profil d'un dispositif conforme à l'invention,

— la figure 2 en est une vue de dessus,

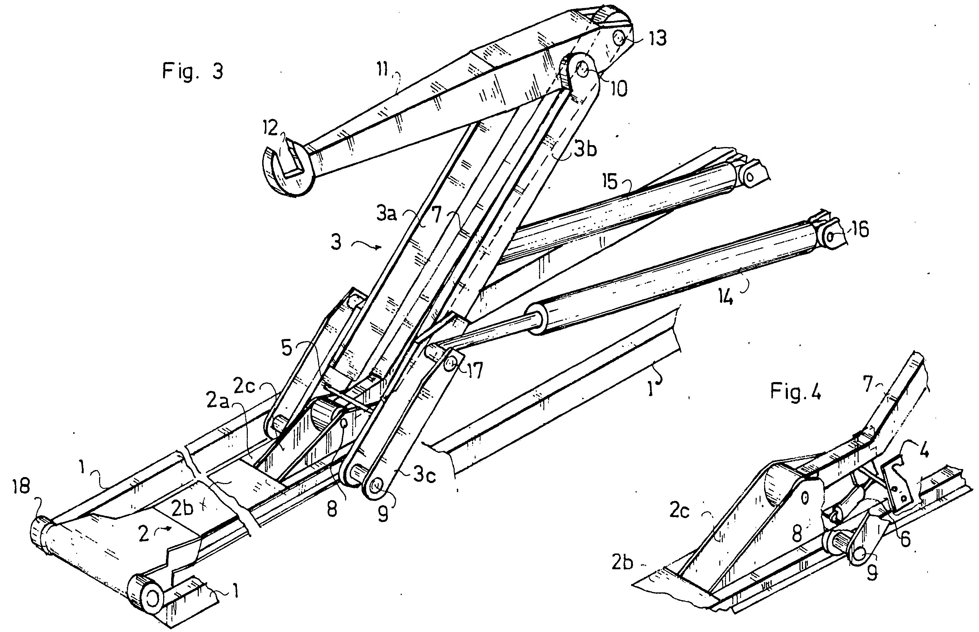

— la figure 3 en est une vue en perspective montrant le dispositf à moitié replié,

— la figure 4 en est une vue de détail en perspective arrachée,

— les figures 5, 6, 7, 8, 9 et 10 sont des vues schématiques illustrant le fonctionnement cinématique du dispositif.

Le mode de réalisation illustré aux figures est monté sur un camion doté d'un châssis qui supporte un faux-châssis (on assimilera par la suite ce faux-châssis au châssis proprement dit, l'ensemble étant désigné par le terme châssis et visé par la référence 1).

A l'arrière du châssis 1 est articulé en 18 un bras inférieur 2 qui repose sur ce châssis dans l'état de repos du dispositif ou pendant les manoeuvres de mise en place et de dépose de la benne. De façon classique ce bras inférieur est formé de membrures latérales 2a, entretoisées par des plaques 2b; en outre il porte une chape d'articulation 2c qui le surmonte.

Vers l'avant du bras inférieur 2 est articulé en 9 un bras de levage 3 formé par deux membrures 3a et 3b et pourvu de chapes d'articulation latérales 3c. Notons que l'expression "vers l'avant du bras inférieur" ne doit pas être prise dans un sens strict, mais simplement comme indiquant que l'articulation du bras de levage est située dans la partie avant de ce bras inférieur. Ce dernier comporte en effet un prolongement avant qui porte des moyens de verrouillage constitués par un couple de crochets 4. Lorsque le bras inférieur 2 et le bras de levage 3 sont au repos sur le châssis, dans l'alignement l'un de l'autre, ces crochets 4 peuvent coopérer avec un axe d'accrochage 5 porté par le bras de levage, afin de solidariser d'un bloc ces deux bras. Un vérin 6 de faible puissance est prévu pour manoeuvrer les crochets 4; ce vérin est situé axialement entre les membrures latérales du bras inférieur, qui sont découvertes à son niveau. Notons qu'il serait possible d'inverser la position des crochets 4 et axe d'accrochage 5, les premiers étant portés par le bras de levage 3 et le second par le bras inférieur 2; toutefois la première solution est meilleure en pratique car elle permet de placer le vérin 6 dans le bras inférieur qui ne pivote que dans les manoeuvres de bennage.

En outre, sur la chape 2c du bras inférieur est articulée une bielle axiale 7 par une articulation 8 décalée vers le haut par rapport à celle 9 du bras de levage.

A l'extrémité avant du bras de levage est articulé en 10 un bras d'accrochage 11 pourvu à son extrémité supérieure d'un crochet de préhension classique 12. La bielle 7 est elle-même articulée sur ce bras d'accrochage 11 en un point 13 décalé vers le bas par rapport au point d'articulation 10 du bras de levage 3; ainsi, au repos la bielle 7 et le bras de levage 3 se croisent puisque leurs articulations respectives sur le bras inférieur 2 et sur le bras d'accrochage 11 sont inversées. La longueur relative de la bielle 7 (par rapport à celle du bras de levage 3) est telle que, dans l'état de repos, le bras d'accrochage 11 soit à peu près vertical.

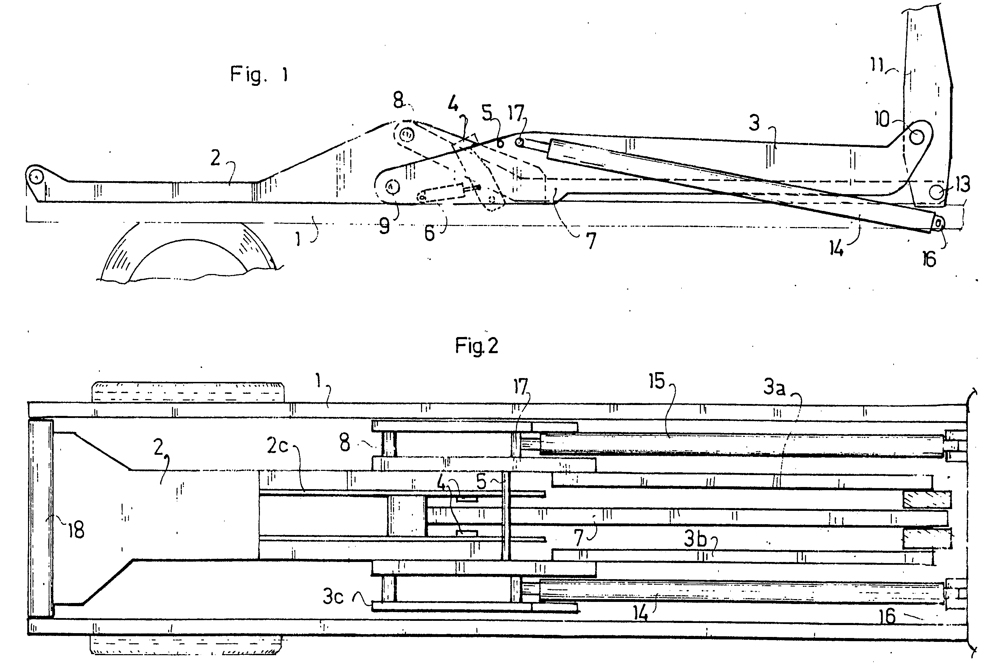

Comme le montre la figure 1, les articulations 9, 8 et 10, 13 du bras de levage 3 et de la bielle 7, respectivement sur le bras inférieur 2 et sur le bras d'accrochage 11 sont approximativement situées aux quatre sommets d'un trapèze isocèle, les deux articulations 9 et 10 du bras de levage étant sur une diagonale et les deux articulations 8 et 13 de la bielle sur l'autre diagonale. Cette disposition permet de réaliser un dispositif dans lequel la position où la bielle 7 et le bras de levage 3 se décroisent lorsque ce dernier pivote, correspond approximativement à la position haute du crochet du bras d'accrochage; on comprendra mieux plus loin l'intérêt de cette disposition.

Par ailleurs, deux vérins de puissance 14 et 15 synchrones et constamment parallèles entre eux sont articulés, d'une part, en 16 à l'avant du châssis, d'autre part, en un point intermédiaire 17 du bras de levage 3. L'articulation 17 sur le bras de levage présente une position surélevée par rapport à l'articulation opposée 16 sur le châssis. On facilite ainsi l'amorçage du mouvement de pivotement aussi bien autour de l'articulation 18 au cours des manoeuvres de bennage, qu'autour de l'articulation 9 au cours des manoeuvres de mise en place ou de dépose de la benne.

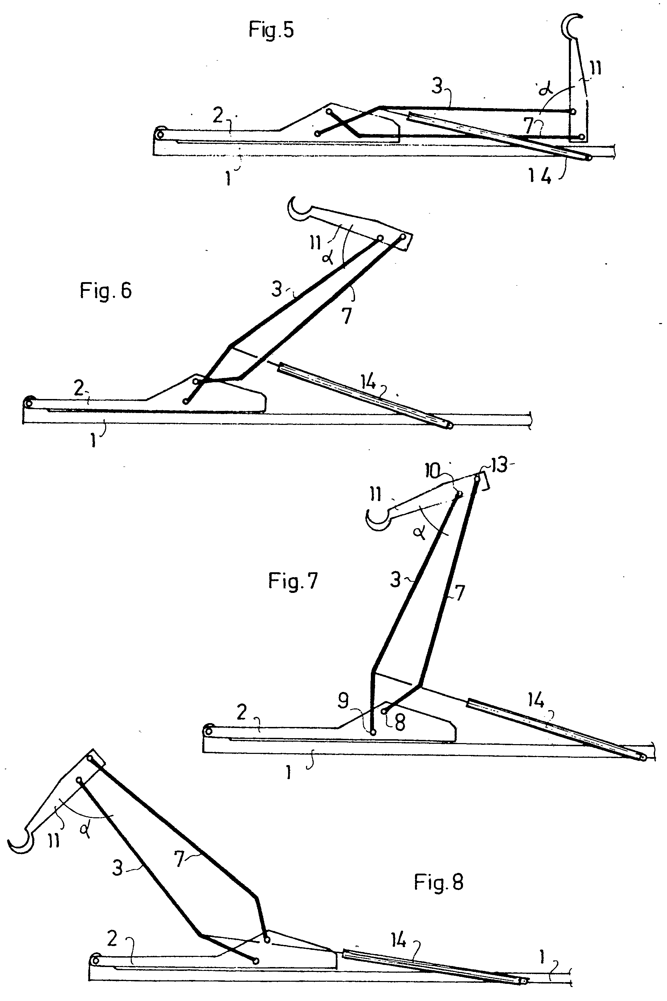

On conçoit la simplicité de structure du dispositif de manoeuvre décrit dont le fonctionnement cinématique va être expliqué en référence aux figures 5, 6, 7, 8 9 et 10.

La figure 5 montre le dispositif à l'état de repos; la benne symbolisée en 19 est en place en position de transport. Les bras de levage 3 et bielle 7 se croisent; le bras de levage 3 est porté par le châssis dans l'alignement du bras inférieur 2. Le bras d'accrochage forme avec le bras de levage un profil angulaire d'angle au sommet $\alpha$ égal à environ 90°.

Les crochets 4 étant reployés (non accrochés à l'axe 5), l'action synchrone des vérins de puissance 14 et 15 amène le bras de levage 3 à pivoter autour de l'articulation 9; les mouvements combinés du bras de levage et de la bielle 7 croisée avec celui-ci engendrent un pivotement vers le bas et vers l'arrière du bras d'accrochage 11 avec une décroissance de l'angle $\alpha$ (fig. 6).

Lorsque, dans la position représentée à la figure 7, les articulations 9, 8 et 10 parviennent dans l'alignement, l'angle $\alpha$ passe par sa valeur minimum (d'environ 45° en l'exemple) et le bras de levage 3 et la bielle 7 sont sur le point de se décroiser. Pour abaisser au maximum le point de passage haut du crochet de préhension 12, il est avantageux que l'apparition de la valeur minimum de l'angle $\alpha$ survienne sensiblement au point de passage haut du crochet 12 et c'est ce que permet l'agencement en trapèze isocèle déjà évoqué des articulations 9, 8, 10 et 13. On parvient ainsi à aplatir très fortement la trajectoire ducrochet 12, et donc, à réduire notablement par rapport aux dispositifs connus, l'inclinaison de la benne en cours de pose ou de dépose.

Un pivotement supplémentaire (fig. 8) engendre une action inverse sur le bras d'accrochage 11 qui s'écarte du bras de levage 3, l'angle $\alpha$ devenant croissant.

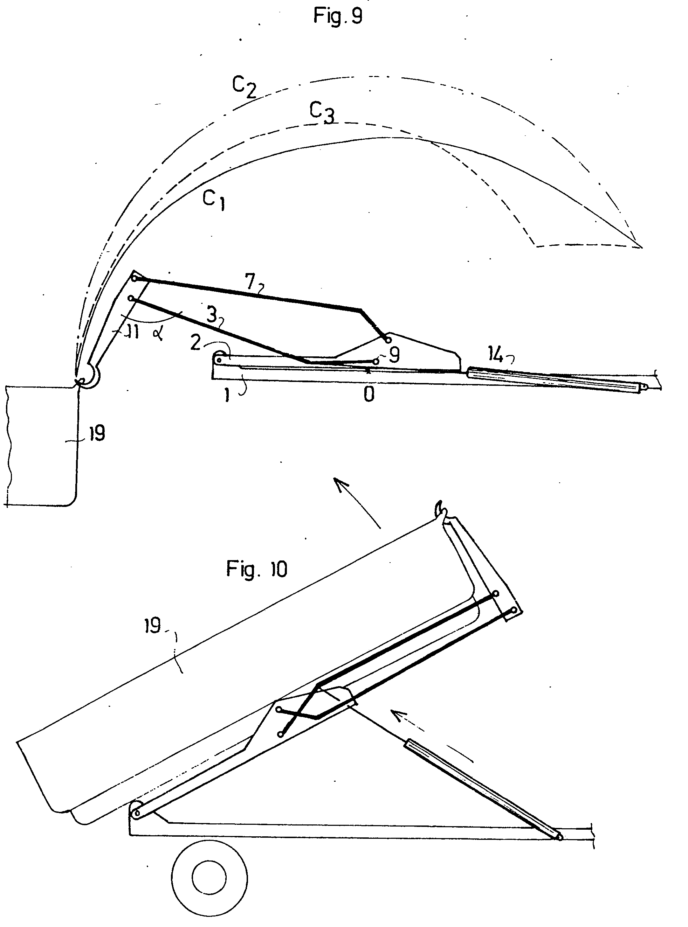

En fin de pivotement (fig. 9) l'angle $\alpha$ a repris une valeur de l'ordre de 90° et le crochet de préhension 12 du bras d'accrochage peut ainsi passer derrière l'extrémité arrière du camion avec un espace suffisant pour être accroché à une benne posée à terre et pour la soulever au-dessus du châssis de camion, et ce, malgré le fait que l'articulation 9 soit située très en avant sur le châssis du camion. Notons que le mouvement du bras d'accrochage peut se poursuivre, le cas échéant, pour réaliser l'accrochage d'une benne située dans une fosse.

On a représenté à la figure 9 la trajectoire $C_1$ du crochet de préhension 12; celle-ci est considérablement aplatie par rapport à la trajectoire circulaire $C_2$ obtenue avec un bras d'accrochage fixé à l'équerre par rapport au bras de levage. A titre indicatif on a également représenté la trajectoire $C_3$ (mouvement de recul puis mouvement circulaire) d'un crochet manoeuvré par un dispositif du type de celui visé dans le préambule à la page 2. Il est à noter que dans ce type de dispositif, pour atteindre la même position avant de transport, et la même position arrière d'accrochage d'une benne au sol, le point de rotation O du bras de levage doit être situé notablement plus à l'arrière que le point de rotation similaire 9 du dispositif de l'invention, le bras inférieur étant très court dans ce dispositif connu et le bras de levage étant au contraire beaucoup plus long.

Par ailleurs, la figure 10 montre une manoeuvre de bennage; l'action du vérin 6 de faible puissance engendre l'accrochage des crochets 4 et la solidarisation des bras inférieur 2 et bras de levage 3. Les bras inférieur 2, bras de levage 3, bielle 7, bras d'accrochage 11 forment alors un ensemble indéformable et la benne peut être très fortement inclinée.

## Revendications

1. Dispositif de manoeuvre articulé sur un châssis de camion (1) pour permettre de manoeuvrer une benne, comprenant un bras inférieur (2) articulé par son extrémité arrière à l'arrière du camion, un bras de levage (3) articulé par son extrémité arrière vers l'avant du bras inférieur, un bras d'accrochage (11) pourvu à une extrémité libre d'un crochet de préhension (12) et articulé en partie basse sur le bras de levage de façon à former avec ce bras de levage un profil angulaire d'angle au sommet variable, des moyens de verrouillage (4, 5, 6) adaptés pour permettre soit de solidariser d'un bloc le bras inférieur (2) et le bras de levage (3) approximativement dans l'alignement l'un de l'autre, soit de libérer ces deux bras pour autoriser un pivotement du bras de levage par rapport au bras inférieur, et au moins un vérin d'entraînement (14, 15) articulé à l'avant du châssis, ledit dispositif de manoeuvre comprenant au moins une bielle (7) articulée d'une part, par son extrémité avant en partie basse du bras d'accrochage (11) en un point (13) décalé verticalement par rapport à l'articulation (10) du bras de levage sur ledit bras d'accrochage, d'autre part, par son extrémité arrière, sur le bras inférieur (2) en un point (8) décalé verticalement par rapport à l'articulation du bras de levage sur ledit bras inférieur, les articulations (9, 10; 8, 13) des bras de levage (3) et bielle (7) respectivement sur les bras d'accrochage (11) et bras inférieur (2) ayant, pour l'état de repos du dispositif de manoeuvre, des positions inversées l'une par rapport à l'autre, de sorte que, dans cet état, les bras de levage (3) et bielle (7) se croisent, le vérin ou les vérins d'entraînement (14, 15) étant agencés pour agir sur une zone intermédiaire (17) du bras de levage (3) de sorte que son ou leur action provoque, lorsque les moyens de verrouillage (4, 5, 6) sont débloqués, un pivotement du bras de levage par rapport au bras inférieur, s'accompagnant, d'abord, d'une décroissance de l'angle ($\alpha$) entre bras de levage et bras d'accrochage, puis, à partir de la position où le bras de levage et la bielle se décroisent, une croissance dudit angle.

2. Dispositif de manoeuvre selon la revendication 1, caractérisé en ce que, dans son état de repos, les articulations (9, 10; 8, 13) du bras de levage (3) et de la bielle (7), respectivement, sur le bras inférieur (2) et sur le bras d'accrochage (11) sont approximativement situées aux quatre sommets d'un trapèze isocèle, les deux articulations (9, 10) du bras de levage étant sur une diagonale et les deux articulations (8, 13) de la bielle sur l'autre diagonale, la position où la bielle et le bras de levage se décroisent lorsque ce dernier pivote, correspondant approximativement à la position haute du crochet (12) bras d'accrochage.

3. Dispositif de manoeuvre selon l'une des revendications 1 ou 2, caractérisé en ce que, pour la position de repos du dispositif, l'articulation (13) de la bielle sur la bras d'accrochage est décalée vers le bas par rapport à l'articulation (10) du bras de levage sur ledit bras d'accrochage, cependant que, inversement, l'articulation (8) de la bielle sur le bras inférieur est décalée vers le haut par rapport à l'articulation (9) du bras de levage sur ledit bras inférieur.

4. Dispositif de manoeuvre selon l'une des revendications 1, 2 ou 3, caractérisé en ce que le vérin ou les vérins (14, 15) sont articulés sur le bras de levage par une articulation (17) de position surélevée par rapport à la position de l'articulation opposée (16) dudit vérin sur le châssis.

5. Dispositif de manoeuvre selon l'une des revendications 1, 2, 3 ou 4, caractérisé en ce que les moyens de verrouillage comprennent au moins un crochet (4) articulé sur l'un des bras, bras inférieur (2) ou bras de levage (3), et un axe d'accrochage (5) solidaire de l'autre bras, bras de levage ou bras inférieur, ce crochet étant associé à un vérin de manoeuvre de faible puissance (6) et agencé pour pouvoir coopérer avec l'axe d'accrochage lorsque les bras inférieur et bras de levage sont dans l'alignement.

6. Dispositif de manoeuvre selon l'une des revendications 1, 2, 3, 4 ou 5, caractérisé en ce qu'il comprend une bielle unique (7) disposée selon l'axe longitudinal du châssis (1), deux membrures (3a, 3b) situées symétriquement de part et d'autre de ladite bielle et formant le bras de levage et deux vérins d'entraînement synchrones (14, 15) attelés chacun à une membrure.

## Patentansprüche

1. An einem Lastwagenfahrgestell (1) angelenkte Betätigungsvorrichtung zum Betätigen einer Kippermulde, mit einem unteren Arm (2), der mit seinem hinteren Ende am Hinterteil des Lastwagens angelenkt ist, mit einem Hubarm (3), der mit seinem hinteren Ende in der Nähe des Vorderteils des unteren Arms angelenkt ist, mit einem Einhängearm (11), der an einem freien Ende mit einem Greifhaken (12) versehen und mit dem Unterteil am Hubarm derart angelenkt ist, dass er mit diesem Hubarm ein Winkelprofil mit veränderlichem Scheitelwinkel bildet, mit einer Verriegelungseinrichtung (4, 5, 6), die entweder den unteren Arm (2) und den Hubarm (3) ungefähr zueinander ausgefluchtet als Block fest miteinander verbindet oder diese beiden Arme freigibt, um eine Schwenkung des Hubarms gegenüber dem unteren Arm zu ermöglichen, und mit wenigstens einem am Vorderteil des Fahrgestells angelenkten Stellzylinder (14, 15), gekennzeichnet durch wenigstens eine Stange (7), die angelenkt ist einerseits mit ihrem vorderen Ende am Unterteil des Einhängearms (11) an einem Punkt (13), der gegenüber der Anlenkung (10) des Hubarms am Einhängearm senkrecht versetzt ist, und andererseits mit ihrem hinteren Ende am unteren Arm (2) an einem Punkt (8), der gegenüber der Anlenkung des Hubarms am unteren Arm senkrecht versetzt ist, wobei die Anlenkungen (9, 10; 8, 13) des Hubarms (3) und der Stange (7) am Einhängearm (11) und am unteren Arm (2) in Ruhezustand der Betätigungsvorrichtung zueinander umgekehrte Stellungen derart haben, dass sich in diesem Zustand der Hubarm (3) und die Stange (7) kreuzen, wobei der oder die Stellzylinder (13, 14) beaufschlagt werden und auf einen Zwischenbereich (17) des Hubarms (3) derart einwirken, dass seine oder ihre Wirkungen bei entriegelter Verriegelungseinrichtung (4, 5, 6) eine Schwenkung des Hubarms gegenüber dem unteren Arm bewirken, begleitet zunächst von einer Abnahme des Winkels ($\alpha$) gegenüber dem Hubarm und dem Einhängearm und dann, ausgehend von der Stellung, in der sich der Hubarm und die Stange nicht mehr kreuzen, von einer Zunahme dieses Winkels.

2. Betätigungsvorrichtung nach Anspruch 1, dadurch gekennzeichnet, dass in ihrem Ruhezustand die Anlenkungen (9, 10; 8, 13) des Hubarms (3) und der Stange (7) am unteren Arm (2) und am Einhängearm (11) sich ungefähr an den vier Scheiteln eines gleichschenkeligen Trapezes befinden, wobei die beiden Anlenkungen (9, 10) des Hubarms sich auf einer Diagonale und die beiden Anlenkungen (8, 13) der Stange auf der anderen Diagonale befinden, und wobei die Stellung, in der die Stange und der Hubarm sich nicht mehr kreuzen, wenn letzterer schwenkt, ungefähr der oberen Stellung des Hakens (12) des Einhängearms entspricht.

3. Betätigungsvorrichtung nach einem der Ansprüche 1 oder 2, dadurch gekennzeichnet, dass in der Ruhestellung der Vorrichtung die Anlenkung (13) der Stange am Einhängearm gegenüber der Anlenkung (10) des Hubarms am Einhängearm nach unten versetzt ist, während umgekehrt die Anlenkung (8) der Stange am unteren Arm gegenüber der Anlenkung (9) des Hubarms am unteren Arm nach oben versetzt ist.

4. Betätigungsvorrichtung nach einem der Ansprüche 1, 2 oder 3, dadurch gekennzeichnet, dass der oder die Stellzylinder (14, 15) am Hubarm mittels einer Anlenkung (17) angelenkt sind, deren Stellung gegenüber der Stellung der gegenüberliegenden Anlenkung (16) des Stellzylinders am Fahrgestell erhöht ist.

5. Vorrichtung nach einem der Ansprüche 1, 2, 3 oder 4, dadurch gekennzeichnet, dass die Verriegelungseinrichtung aufweist: einen am unteren Arm (2) oder am Hubarm (3) angelenkten Haken (4) und eine mit dem anderen Arm fest verbundene Einhängeachse (5), wobei der Haken mit einem Stellzylinder (6) geringer Leistung verbunden und so ausgebildet ist, dass er mit der Einhängeachse zusammenarbeiten kann, wenn der untere Arm und der Hubarm ausgefluchtet sind.

6. Betätigungsvorrichtung nach einem der Ansprüche 1, 2, 3, 4 oder 5, gekennzeichnet durch eine in der Längsachse des Fahrgestells (1) angeordnete einzige Stange (7), durch zwei Glieder (3a, 3b), die beiderseits der Stange symmetrisch angeordnet sind und den Hubarm bilden, und durch zwei synchron arbeitende Stellzylinder (14, 15), von denen jeder an einem Glied angelenkt ist.

**Claims**

1. Manoeuvring device articulated on a truck chassis (1) to enable the operation of manoeuvring a container, comprising a lower arm (2) hinged at its rear end on the rear end of the truck, a lifting arm (3) hinged at its rear end on the forward section of the lower arm, a hooking arm (11) provided with a prehension hook (12) at a free end and hinged at its lower end on the lifting arm so as to forme an angle profile with a variable vertex with this lifting arm, locking means (4, 5, 6) adapted to enable the locking as a single unit of lower arm (2) and lifting arm (3) in approximate alignment or the unlocking of these two arms so as to allow the lifting arm to pivot with respect to the lower arm, and at least one driving jack (14, 15) hinged on the forward section of the chassis, the said manoeuvring device comprising at least one rod (7) hinged, on the one hand, at its forward end on the rear end of the hooking arm (11) at a vertically offset point (13) with respect to the hinge (10) of the lifting arm on the said hooking arm, on the other hand, at its rear end on the lower arm (2) at a vertically offset point (8) with respect to the hinge of the lifting arm on the said lower arm, the hinges (9, 10; 8, 13) of the lifting arm (3) and the rod (7) respectively on the hooking arm (11) and the lower arm (2) presenting mutually inverted positions in the rest position of the manoeuvring device, so that, in this configuration, the lifting arm (3) and the rod (7) are crossing, the driving jack (s) (14, 15) being located to operate on an intermediate area (17) of the lifting arm (3) so that its (or their) operation provokes, after unlocking of the locking means (4, 5, 6) a pivoting of the lifting arm with respect to the lower arm, with at first a decrease of the angle ($\alpha$) formed between lifting arm and hooking arm and then an increase of the said angle starting from the position where the lifting arm and the rod are uncrossing.

2. Manoeuvring device as set forth in claim 1, characterized in that, when in rest position, the hinges (9, 10; 8, 13) of the lifting arm (3) and of the rod (7) respectively on the lower arm (2) and the hooking an isoceles trapezoid with the two hinges (9, 10) of the lifting arm (3) being located on one diagonal and the two hinges (8, 13) of the rod on the other diagonal, and the position where the rod and the lifting arm are uncrossing when the latter pivots corresponding approximately to the highest position of the hook (12) of the hooking arm.

3. Manoeuvring device as set forth in claim 1 or 2, characterized in that, when in rest position the hinge (13) of the rod on the hooking arm is downward offset with respect to the hinge (10) of the lifting arm on the said hooking arm while, on the contrary, the hinge (8) of the rod on the lower arm is offset upward with respect to the hinge (9) of the lifting arm on the said lower arm.

4. Manoeuvring device as set forth in claim 1, 2 or 3, characterized in that the jack or jacks (14, 15) are hinged on the lifting arm by means of a hinge (17) in a raised position with respect to the position of the opposite hinge (16) of the said jack on the chassis.

5. Manoeuvring device as set forth in claim 1, 2, 3 or 4, characterized in that the locking means comprise at least one hook (4) hinged on one of the arms, the lower arm (2) or the lifting arm (3), and a hooking pin (5) rigidly locked with the other arm, the lifting arm or the lower arm, this hook being associated with a low power operating jack (6) and located so as to enable cooperation with the hooking pin when the lower arm and the lifting arm are in alignment.

6. Manoeuvring device as set forth in claim 1, 2, 3, 4 or 5, characterized in that it comprises a single rod (7) laid out following the longitudinal axis of the chassis (1), two limbs (3a, 3b) symmetrically located on either side of the aforesaid rod so as to form the lifting arm, and two synchronous driving jacks (14, 15) each coupled to one limb.

Fig. 1

Fig. 2

Fig. 3

Fig. 4

2

Fig.5

Fig. 6

Fig. 7

Fig. 8

Fig. 9

$C_2$

$C_3$

$C_1$

$7_2$

$3_2$

11 α

2

$14_2$

1

0

9

19

Fig. 10

19